# EUROPEAN PATENT APPLICATION

(11) **EP 2 944 623 A1**
(43) Date of publication of application: **18.11.2015**
(21) Application number: 14168739.2
(22) Date of filing: 16.05.2014
(51) Int. Cl.: C04B 28/12

(54) **Mortar based on natural hydraulic lime**

(71) Applicant: Marmi Ghirardi SRL, 25013 Carpenedolo (Brescia) (IT); Cooperativa Operai Cavatori del Botticino, 25082 Botticino (Brescia) (IT); Cooperativa Valverde, 25080 Botticino Mattina (Brescia) (IT)
(72) Inventor: Sala, Elisa, 25123 Brescia (IT)
(74) Representative: Lunati & Mazzoni S.r.L.

(57) **Abstract**

A mortar is provided comprising a hydraulic binding agent suitable to confer a gripping capacity on said mortar and to harden said mortar when in contact with water; and aggregates comprising a limestone component preferably in the form of mud.

## Description

The present invention relates to a mortar of the type as recited in the preamble of the first claim.

In particular, the invention relates to a mortar of the hydraulic type, i.e. suitable to complete the carbonation process both in contact with the air, and in a moist environment while maintaining adequate mechanical properties over time.

Mortar is a conglomerate consisting of a binding agent (aerial or hydraulic), water, aggregates (the most common are silica sands) and sometimes additives. Everything is mixed in such proportions as to make the wet mixture workable and to give the dry mixture in use the appropriate mechanical properties.

The present invention considers lime mortars with hydraulic characteristics.

To obtain a lime mortar with hydraulic characteristics, the binding agent may be a hydraulic lime (HL). Such lime is made by firing closely related and homogeneous mixtures of limestone and clay materials and subsequent quenching and grinding. In other cases, the binding agent may be a natural hydraulic lime (NHL) made from natural marl subjected to firing, quenching and grinding (for further details, refer to the UNI EN 459-1:2010).

The aggregate is usually silica sand taken from sedimentary deposits or made by crushing rocks free of harmful substances (for further details refer to the UNI EN 13139:2003 and UNI 11320:2009).

The mortars obtained with generic hydraulic limes (HL) guarantee high mechanical performance. The presence of artificial additives makes them unsuitable for application to historic buildings on account of chemical and mechanical incompatibility with the original materials.

Mortars made with natural hydraulic limes (NHL) ensure good mechanical performance. The natural quality of the components makes them suitable for application to historic buildings, new buildings and in the field of bio-construction. In this situation, the technical purpose behind the present invention is to devise a natural hydraulic lime (NHL) mortar able to overcome the drawbacks cited for the mortars made using hydraulic lime (HL).

Within the context of said technical purpose one important object of the invention is to make a mortar with reduced environmental impact, with high mechanical performance and which is stable over time.

The technical purpose and specified aims are achieved by a mortar as claimed in the appended Claim 1.

Preferred embodiments are described in the dependent claims.

The mortar according to the invention comprises a natural hydraulic binding agent, aggregates (including limestone mud) and water.

The volumetric ratio between binding agent and aggregates is equal to 1 to 2. The natural hydraulic lime is of average hydraulicity (NHL 3.5) or eminently hydraulic (NHL 5). The physical, chemical and mechanical properties of such binding agents are shown in UNI EN 459-1:2010.

The aggregate comprises a limestone component and, preferably, a limestone mud made from pulverised limestone rocks (e.g. marble) having, appropriately, a maximum grain size of less than 4 mm and, more appropriately less than 1 mm. The limestone component comprises limestone powder and, thus, limestone mud resulting from processing in the laboratory of Botticino Marble (Brescia, Italy) having a maximum diameter of less than 1 mm and processed so as to obtain a filter-pressed mud.

In particular, this limestone powder and, thus, the limestone mud are preferably made from processing scrap of limestone rocks. In fact, when processing the limestone, the machine tools for removing material produce powder scrap having the desired characteristics. More specifically, the limestone mud is a filter-pressed limestone mud, i.e. made by passing through a filter-press the limestone dust directly obtained from processing scrap of limestone rocks.

In detail, the aggregate comprises only a limestone component, i.e. only limestone mud.

Alternatively, the aggregates comprise limestone (in detail limestone mud) and an additional component selected from silica sand and natural pozzolan, appropriately, of volcanic origin. In particular, the volumetric ratio between the limestone component and additional component is equal to 1 to 1, namely the aggregates comprise 50% of limestone component and 50% of additional component.

The sand is of a natural type and, preferably, silica with a particle size between 1.5 and 2.5 mm.

The quantity of water added to the mixtures is such as to ensure complete mixing and workability; the addition of water will be approximately 50% of the amount in volume of the binding agent used.

In order to demonstrate the effectiveness of the method the results of some tests performed by the applicant of the present patent are given.

These tests were carried out in compliance with current legislation (UNI EN 1015-11:2007) and provided for the creation of a series of parallelepiped samples of 40 mm x 40 mm x 160 mm. These samples were subjected to tests to determine the average flexural strength and compressive strength at different stages of drying.

It should be noted that for all the mortars made, the same manufacturing method was used and the same drying conditions maintained. The type of binding agent, aggregates and quantity of water remained unvaried.

The mixtures used are shown in Table 1, which gives the name of the mixture and the volumetric ratio of the elements constituting the mortar, excluding water.

**Table 1: Mortars used in the experiment and volumetric proportions of the components.**

| **Name of mixture** | **Binding agent (lime)** | | **Aggregates** | | |
|---|---|---|---|---|---|
| | **NHL 3.5** | **NHL 3.5** | **Limestone mud** | **Silica sand** | **Natural pozzolan** |
| B_{basic} | 1 | | | 2 | |
| C_{basic} | | 1 | | 2 | |
| B_{f50%} | 1 | | 1 | 1 | |
| C_{f50%} | | 1 | 1 | 1 | |
| B_{f} | 1 | | 2 | | |
| C_{f} | | 1 | 2 | | |
| E_{f} | 1 | | 2 | | |
| B_{fp} | 1 | | 1 | | 1 |
| B_{p50%} | 1 | | | 1 | 1 |
| C_{p50%} | | 1 | | 1 | 1 |

It is to be noted how, for the production of the samples, the limestone component used was taken from limestone scrap reduced by the action of filter presses into mud products, i.e. limestone mud.

A first analysis, shown in table 2, has as its object the weight trend of the samples at given times.

**Table 2: Analysis of the weight trend of some mortars**

| | B_{basic} | C_{basic} | B_{f50%} | C_{f50%} | B_{f} | C_{f} | B_{fp} | B_{p50%} | C_{p50%} |
|---|---|---|---|---|---|---|---|---|---|
| Average weight [g] at 5 days | -- | -- | 487.3 | 497.0 | 437.1 | 451.6 | 470.2 | -- | -- |
| Average weight [g] at 10 days | -- | -- | 472.1 | 480.1 | 411.9 | 431.5 | 452.6 | -- | -- |
| Average weight [g] at 28 days | 458.7 | 478.8 | 445.4 | 454.0 | 373.6 | 399.0 | 434.8 | 474.3 | 498.3 |
| Average weight [g] at 60 days | 458.4 | 478.6 | 434.1 | 444.2 | 355.7 | 378.6 | 425.8 | 470.0 | 490.7 |
| Average weight [g] at 90 days | 458.1 | 476.3 | 434.0 | 443.0 | 353.6 | 367.9 | 424.8 | 468.0 | 474.0 |

The comparison of the results showed that the weight of the samples with limestone component was, in the first days of drying, in line with the weight of the samples made without the aggregates; it emerged however that the weight of the samples with at least one limestone component decreased in the long run. Another analysis of considerable interest was the analysis of the test results for determining the flexural strength of the samples.

The results of this analysis are summarised in Table 3 below.

From the results of Table 3 and, in particular, comparing the samples made using Bbasic and Cbasic mortars with samples of Bf50% and C50% mortars, it can be deduced that the substitution of a volumetric portion equal to 50% of silica sand with the limestone component generally improves the flexural strength in the short and long term.

This experimental evidence is believed to be due to the creation of a more accurate mesh of the inert skeleton in the mixtures containing the limestone component. In addition, the fact that the limestone component determines an advantageous and unquestionable tendency to improve the mechanical properties with the advancement of drying is to be emphasised.

**Table 3: Average flexural strength values**

| | B_{basic} | C_{basic} | B_{f50%} | C_{f50%} | B_{f} | C_{f} | B_{fp} | B_{p50%} | C_{p50%} |
|---|---|---|---|---|---|---|---|---|---|
| flexural strength [MPa] 28 days | 0.48 | 0.84 | 0.83 | 1.87 | 1.07 | 0.96 | 0.50 | 0.58 | 0.69 |
| flexural strength [MPa] 60 days | 0.65 | 0.86 | 0.94 | 1.88 | 0.85 | 1.11 | 0.48 | 0.69 | 0.98 |
| flexural strength [MPa] 90 days | 0.72 | 1.05 | 1.39 | 1.96 | 1.01 | 1.35 | 0.36 | 0.42 | 0.88 |

Another analysis of considerable interest is the determination of the average values of the compressive strength of the mortars made (see table 4).

**Table 4: Average values of compressive strength**

| | B_{basic} | C_{basic} | B_{p50%} | C_{p50%} | B_{f50%} | C_{f50%} | B_{f} | C_{f} | B_{fp} | C_{f} |
|---|---|---|---|---|---|---|---|---|---|---|
| compressiv e strength [MPa] 28 days | 1.08 | 1.93 | 3.45 | 5.64 | 1.71 | 2.02 | 0.93 | 1.41 | 3.66 | 0.41 |
| compressiv e strength [MPa] 60 days | 1.40 | 2.03 | 3.85 | 5.79 | 2.52 | 3.13 | 1.73 | 2.29 | 4.73 | 0.52 |
| compressiv e strength [MPa] 90 days | 1.38 | 2.19 | 4.28 | 6.47 | 3.29 | 3.47 | 2.37 | 2.53 | 5.33 | 0.65 |

The analysis of the results obtained for the mortars containing 50% of limestone component showed results in line with those obtained for determining the flexural strength.

This aspect confirms how the use, in the form of aggregates, of the limestone component leads to an increase in resistance compared to using only siliceous aggregates. This advantage is particularly evident as the drying of the mortar progresses.

Tables 3 and 4 also show that the mortars having as aggregates a mixture of limestone mud and natural pozzolan achieved excellent compressive strength results, even better than those obtained using silica sand and natural pozzolan as aggregates.

The results of the tests described above were confirmed by further investigations concerning the determination of the elastic modulus of the mortar and the measurement of the first crack load and the elastic modulus for samples of brick masonry with mortar joints made according to the above directions.

The invention therefore proposes a new field of application for limestone muds deriving from laboratory processing and subjected to passage through filter presses. The tests carried out used mud coming from processing Botticino Marble (Brescia, Italy).

The invention provides for the use of muds as aggregates for natural hydraulic lime based mortars.

The invention achieves some important advantages.

In fact, on the basis of the above results, the limestone mud plays an active role in improving the mechanical characteristics of NHL-based mortars. In general, mixtures containing limestone mud and silica sand achieved higher compressive strength values than those containing only silica sand.

In addition, using as aggregates both limestone mud and natural pozzolan, a mortar is obtained with significantly improved mechanical properties compared to a mortar made with silica sand or with silica sand and limestone mud. This happens due to activation of the pozzolanic process.

One important advantage is the fact that the mortar is made from limestone mud, thus with natural materials which are not harmful or noxious; this facilitates chemical compatibility with the original materials in work on historic buildings.

A further advantage given by using the processing scrap of limestone rocks is represented by the fact that this choice makes it possible to take advantage of material not otherwise used, which for its disposal requires particularly expensive and time-consuming methods for the companies.

Another advantage is the fact that the pigmentation of the mortar, thanks to the at least partial replacement of the silica sand with the limestone component, is extremely white and, therefore, of high aesthetic value and of extreme interest to renovation sites of monumental buildings and, more generally, in the case of works on historical buildings.

One advantage is the fact that, over time, the mortar containing limestone mud undergoes a reduction in weight. These mortars may therefore be effectively used as filling materials in works on historical buildings, for example in the case of structural improvements to wooden vaults and floors.

Variations may be made to the invention described herein without departing from the scope of the inventive concept. All the elements as described and claimed herein may be replaced with equivalent elements and the scope of the invention includes all other details, materials, shapes and dimensions.

## Claims

1. Mortar comprising
- a selectively chosen hydraulic binding agent of average hydraulicity or eminently hydraulic; and
- **characterised in that** it comprises
- aggregates comprising a limestone component.

2. Mortar according to claim 1, wherein said aggregates comprise a limestone mud of powdered limestone rocks.

3. Mortar according to claim 2, wherein said powder has a maximum grain size less than 1 mm.

4. Mortar according to one or more of the claims 2-3, wherein said limestone mud is made from processing scrap of limestone rocks.

5. Mortar according to one or more of the claims 2-4, wherein said limestone mud derives from the passage through filter presses.

6. Mortar according to one or more of the previous claims, wherein said aggregates comprise exclusively said limestone component.

7. Mortar according to one or more of the claims 1-5, wherein said aggregates comprise said limestone component and an additional component selected from sand and natural pozzolan.

8. Mortar according to the previous claim, wherein the volumetric ratio of the binding agent and aggregate is equal to 1 to 2 and wherein said aggregates comprise 50% of said additional component and 50% of said limestone component.

9. Mortar according to one or more of the claims 7-8, wherein said natural pozzolan is of volcanic origin.

10. Use of marble sludge derived from processing scrap of limestone rocks for the preparation of a mortar according to one or more of the previous claims.
